# EUROPÄISCHE PATENTSCHRIFT

(11) **EP 1 326 318 B1**
(45) Veröffentlichungstag und Bekanntmachung des Hinweises auf die Patenterteilung: **07.02.2007**
(21) Anmeldenummer: 02090424.9
(22) Anmeldetag: 20.12.2002
(51) Int. Cl.: H02J 7/00

(54) **Schaltungsanordnung für eine autonome Stromversorgungsanlage und Verfahren zu ihrem Betrieb**
Circuit arrangement for an autonomous power supply system and method for its operation
Disposition de circuit pour un système d'alimentation de puissance autonome et procédé pour son opération

(30) Priorität: 08.01.2002 DE 10201137
(43) Veröffentlichungstag der Anmeldung: 09.07.2003
(73) Patentinhaber: SIEMENS AKTIENGESELLSCHAFT, 80333 München (DE)
(72) Erfinder: Colberg, Jens, 15754 Bindow (DE); Walter, Harald, 12557 Berlin (DE); Köster, Kay, 15370 Fredersdorf (DE)

(56) Entgegenhaltungen:
- DE-A1- 4 237 835
- GB-A- 2 359 426
- US-A- 5 243 269
- US-A- 5 656 915
- US-A- 5 747 891
- US-B1- 6 268 711
- PATENT ABSTRACTS OF JAPAN Bd. 018, Nr. 382 (E-1580), 19. Juli 1994 (1994-07-19) & JP 06 111852 A (CANON INC), 22. April 1994 (1994-04-22)

## Beschreibung

Die Erfindung betrifft eine Schaltungsanordnung für eine autonome Stromversorgungsanlage mittels Batterien, die über mindestens einen Stromerzeuger geladen werden können, zur Speisung beliebiger elektrotechnischer Einrichtungen wie Steuerungen, Kommunikationseinrichtungen, Lampen, Motoren u. ä., und zwar von Systemen, die autonom unter Feldbedingungen arbeiten. Das betrifft die Energiegewinnung, -speicherung und die Versorgung der Last unter den Bedingungen des Fehlens entsprechender Infrastruktur für Hilfs- oder extern zuführbarer Zusatzenergie, wobei vorzugsweise Generatoren mit statistisch verteilter Energiegewinnung, wie Photovoltaik- und Windkraftanlagen, aber auch einmalig mit Primärenergie versorgte Generatoren mit sehr hohem Wirkungsgrad, wie Brennstoffzellen oder Kombinationen von beiden Generatorarten zum Einsatz kommen sollen. Die Erfindung betrifft auch ein Verfahren zum Betrieb der Stromversorgungsanlage.

Kennzeichnend für derartige Systeme ist, dass in der Regel die Nennleistung des jeweiligen Generators (wesentlich) kleiner ausgelegt wird, als für den Spitzenverbrauch der zu versorgenden Last notwendig wäre. Durch Berechnungen über den zeitlichen Verlauf des Energiebedarfs und Betrachtungen der Balance zwischen Energiegewinn und -verbrauch wird letztendlich die Größe des Generators festgelegt. Aus Kosten- und Platzgründen kommt in der Regel der kleinstmögliche Generator zum Einsatz.

Eine Forderung für derartige Systeme besteht darin, die Aufwendungen für Service und Instandsetzung auf ein absolutes Minimum zu reduzieren und praktisch einen wartungsfreien Betrieb zu gewährleisten. Kennzeichnend dafür ist, dass die Anlage erst dann und nur dann eine Fehlermeldung generieren soll, wenn ein irreparabler Schaden, das Ende der Lebenserwartung der Energiespeicher oder der Verlust des Generators festgestellt wird. Bei Erkennung derart schwerwiegender Fehler muss im System eine solche Verfügbarkeitsreserve hinterlegt sein, dass bis zur Durchführung einer Instandhaltung in einer definierten Restzeit die Stromversorgung aufrecht erhalten werden kann.

Die aufgezeigten Anforderungen liegen z. B. bei hochverfügbaren dezentralen Stromversorgungen vor, wie sie vorzugsweise in der Eisenbahnsicherungstechnik, in Mobilfunksystemen oder bei Seezeichen zur Anwendung kommen.

Auf dem Gebiet der üblichen autonomen Stromversorgungstechnik sind diesbezügliche Aufgabenstellungen nicht bekannt, da Solarstrom- bzw. Windkraftanlagen vorrangig zur Versorgung niedrig priorisierter Verbraucher eingesetzt werden.

Bekannt ist die ständige Überwachung von Batterien in mobilen Anlagen mittels entsprechender Anzeigen. Diese Methode ist für autonome Systeme mit Sicherheits- bzw. Verfügbarkeitsrelevanz ungeeignet, da eine ständige Beobachtung des Zustandes der Anlage ausscheidet. Zudem besteht die grundsätzliche Problematik der sofortigen Verfügbarkeit und des kurzfristigen Tausches von Ersatzbatterien.

Weiterhin ist bekannt, eine autonome Stromversorgung mit einem Haupt- und einem Hilfs- o. Notenergiespeicher auszurüsten, wobei für den Hilfs- oder Notenergiespeicher in der Regel eine alkalische Primärbatterie zum Einsatz kommt. Der Hauptenergiespeicher hinreichend großer Kapazität versorgt im Normalfall die Last, während in dessen Schadens- oder Erschöpfungsfall der im Pufferbetrieb arbeitende der Hilfs- oder Notenergiespeicher eine Aufrechterhaltung des Normalbetriebes für nur kurze Zeit aufrecht erhält. Diese Lösung erlaubt eine größere Reaktionsfähigkeit, entspricht jedoch nicht der geforderten Funktionsweise. Zunächst ergibt sich das Problem, dass bei einer Instandsetzung der Hauptbatterie gleichzeitig die Notbatterie mit getauscht werden muss. Entscheidend ist jedoch, dass der Zustand des Hilfs- oder Notenergiespeichers nicht auf Funktionsfähigkeit überwacht werden kann, da dies mit dessen zwangsläufiger Entladung verbunden ist. Als Hilfs- oder Notenergiespeicher eine wiederaufladbare Batterie zu verwenden, erfordert eine getrennte Ladung, Pufferung und Überwachung sowie zusätzlich die aktive Zuschaltung im Schadensfall der Hauptbatterie.

Aus EP 1 072 493 A1 ist außerdem bekannt, dass mittels eines Umschalters zwischen zwei Batteriezweigen umgeschaltet wird. Hier wird jedoch der Stromfluss beim Umschalten kurzzeitig unterbrochen, was prinzipiell nicht erwünscht ist. Eine unterbrechungsfreie Umschaltung ist in diesem Fall nicht möglich, da bei Überlappung der Schaltzustände der Kontakte unkontrollierbare Ausgleichströme fließen, die die Entladung der Batterie mit dem höheren Spannungsniveau zur Folge haben. Es erfolgt keine Überwachung der Funktionsfähigkeit der gerade nicht an der Last befindlichen Batterie.

Bekannt sind weiterhin Verfahren zur Bestimmung des Ladezustandes von Batterien durch direktes Messen der Elektrolytkonzentration oder durch Bewertung von Spannung und oder von der Last verbrauchtem Strom. Ersteres verlangt den Einsatz von wartungsintensiven Spezialbatterien mit integrierten Sensoren, während die Bewertung nach elektrischen Kenngrößen und Berechnung nach verschiedenen Simulationsmodellen in verschiedenen Nutzungsbereichen zu stark fehlerbehaftet sind. Bei autonomen Anlagen im Inselbetrieb integrieren sich Messfehler über der Zeit, so dass die Bewertung dann unbrauchbar wird.

Eine Neukalibrierung ist in derartigen Systemen nicht möglich, da der Zustand der vollständigen Aufladung der Batterien bei kontinuierlichem Verbrauch durch die Last nicht erreicht werden kann. Andererseits stellt sich die vollständige Entladung des Energiespeichers bis zur Entladeschlussspannung zum Zweck der Gewinnung eines zweiten möglichen Kalibrierungspunktes einen für den Anlagenbetrieb unzulässigen Betriebszustand dar.

Gemäß der US-A 5,243,269, der US-A 5,747,891, der GB 2 359 426 A, der US-B1 6,268,711 oder der US-A 5,656,915 ist der Energiespeicher in mindestens zwei funktional gleichberechtigte parallele Batteriezweige aufgeteilt, deren Kapazität jeweils ausreicht, eine Last allein über einen bestimmten Zeitraum zu versorgen. An jedem Batteriezweig ist auf der Seite des Stromerzeugers wie auf der Seite der Last ein Schalter angeordnet, mit denen der jeweilige Batteriezweig von einer Steuereinheit zum Zweck von Untersuchungen an einer Batterie aus der Stromversorgungsanlage freigeschaltet werden kann, während die anderen Batteriezweige die Versorgung der Last übernehmen.

Üblicherweise sind die Batteriezweige lastseitig mindestens durch Dioden entkoppelt, so dass die Umschaltung zwischen Batteriezweigen unterbrechungslos erfolgen kann.

Auf diese Weise ist einerseits bei eintretenden Schäden an einem Batteriezweig der Betrieb der Stromversorgungsanlage weiterhin möglich, während andererseits der freigeschaltete Batteriezweig untersucht werden kann.

Der Erfindung liegt die Aufgabe zugrunde, ein Verfahren zur autonomen Stromversorgung anzugeben, mit dem die Anlage selbst in der Lage ist, den Zustand ihrer Batterien zu bewerten und nur in einem kritischen Zustand einen Alarm auszulösen, wobei die Verfügbarkeit der Anlage weiter zu erhöhen ist.

Erfindungsgemäß wird die Aufgabe durch die kennzeichnenden Merkmale des Patentanspruchs gelöst.

Durch eine einmalige Messung der Ruhespannung kann auf den aktuellen Ladezustand der Batterie geschlossen werden. Durch einen Ruhespannungstest an einer aus der Stromversorgungsanlage freigeschalteten Batterie mittels zweier Spannungsmessungen in einem Zeitintervall kann die Selbstentladung als ein Zeichen der Alterung festgestellt werden.

Wird die Last über einen bestimmten Zeitraum ohne Generator, das heißt nur an der Batterie eines Batteriezweiges betrieben, kann der von der Last benötigte Energiebedarf ermittelt werden. Aus diesem Verbrauchertest erfolgt eine Rückrechnung der Zeit bis zur Entladung der jeweiligen Batterie. Zusätzlich kann bei Änderungen des Lastverhaltens durch äußere Einflüsse (Kurzschlüsse, Schwerlast, Änderung des Betriebsregimes) die sich ergebende Verkürzung der Entladezeit berechnet werden.

Bei Stromversorgungsanlagen im Inselbetrieb ergeben sich anhand der Kenntnis der Batteriekapazitäten und Ladezustände in den einzelnen Batteriezweigen unterschiedliche Strategien zur Umschaltung zwischen Ladung, Lastversorgung und Bereitschaftshaltung. Ziel der Steuerung ist die Erreichung bzw. Aufrechterhaltung des maximalen Energieinhaltes in den Batterien. Es sind mindestens drei Grundvarianten von Umschaltstrategien sinnvoll, zwischen denen eine automatisch arbeitende Steuerung je nach Energieeintrag durch den Stromerzeuger (Generator) oder/und Energieverbrauch durch die Last eigenständig entscheiden kann.

Eine erste Grundvariante besteht darin, dass die Steuerung zwischen den Batteriezweigen zur Versorgung der Last im Zeitraster einer vom Betreiber gewählten Reservezeit umschaltet, wobei der Generator jeweils die zuletzt mit der Last verschaltete Batterie nachlädt. Hierbei bleibt die Stromversorgungsanlage immer auf einem hohen Niveau der Speicherkapazität bei nur geringer Zyklisierung der Batterien.

Eine zweite Variante besteht darin, einen Batteriezweig mit der Last zu verbinden und diesen soweit zu entladen, bis eine kritische Entladespannung erreicht ist, die als Kenngröße für die Größe der Reservekapazität zur Versorgung der Last dient. In diesem Fall wird jeder Batteriezweig einer Zyklisierung ausgesetzt, was durchaus lebensdauerfördernd wirkt. Die Batterien sollten jedoch nicht bis zur Entladeschlussspannung betrieben werden, da bei einem Fehler während der Umschaltung auf einen anderen Batteriezweig oder durch Schäden in anderen Batteriezweigen oder am Generator noch mindestens die Energiemenge bereitstehen muss, die bei typischem Lastverlauf den Betrieb innerhalb der Reservezeit durch Rückschaltung auf die zuletzt entladene Batterie aufrecht erhält. Der Generator lädt bei dieser Variante immer vorrangig die am meisten entladene Batterie auf.

Die dritte Möglichkeit besteht in der Steuerung eines reinen Standby-Betriebes. Hierzu speisen Generator und ein Batteriezweig ständig die Last. Die anderen Batteriezweige stehen geladen in Bereitschaft. Durch zyklisches Umschalten des Generators auf einen anderen Batteriezweig zur Versorgung der Last, wird außerdem der jeweilige Zweig zum Ausgleich der Selbstentladung nachgeladen. Da bei dieser Variante in der Regel die tägliche Energiebilanz ausgeglichen ist, kann ständig von einem fast vollständig geladenen Energiespeicher ausgegangen werden. Obwohl dieser Zustand am ehesten anzustreben ist, müssen die Nebenwirkungen von voll geladenen Batterien je nach chemischem Typ beachtet werden, da auch drastische Lebensdauerverkürzungen eintreten können.

Da kein oben beschriebenes Verfahren geeignet ist, als solches die Batteriezweige optimal zu betreiben, schaltet das Steuerungssystem auf Grundlage der durchgeführten Batterietests der einzelnen Batteriezweige, deren Ladezuständen sowie dem verfügbaren Energieangebot mit dem Ziel der Ausschöpfung der maximalen Lebensdauer der Energiespeicher zyklisch zwischen diesen Verfahren umschalten.

Sämtliche Funktionsabläufe der Tests sowie die Aufzeichnung der gemessenen Daten werden durch einen Rechner in der Steuereinheit gesteuert. Die entsprechende Software kann in einem Prozessor oder anderen geeigneten Speichermedien gespeichert sein.

Neben der Ausführung der Schalter als kontaktbehaftete Elemente ist auch die Verwendung von Leistungshalbleitern mit kleinen Durchgangswiderständen und energiearmer Ansteuerung, wie z.B. MOSFET-Transistoren möglich.

Die eigenständige Messung von relevanten Strom- und Spannungswerten ermöglicht einen geeigneten Schutz des Generators, der Teilspeicher aber auch der Last. Andererseits ermöglicht der damit aufgebaute Eigenschutz der Anlage Beschädigungen durch extern auftretende Störungen derart entgegenzuwirken, dass eine Zerstörung der Stromversorgungsanlage vermieden wird.

Die vom Generator vollgeladene und von der Last getrennte Batterie eines freigeschalteten Batteriezweiges kann über eine zuschaltbare Entladeschaltung zum Zweck der Kapazitätsermittlung definiert entladen werden.

So kann beispielsweise durch eine einfache Spannungsmessung und eine Zeitsteuerung ohne große Genauigkeitsanforderungen der Zustand einer Batterie getestet werden und durch Vergleich mit im Messsystem gespeicherten Daten vorheriger Messungen eine Analyse über deren Alterung und Lebenserwartung getätigt werden. Integrationsfehler durch zeitabhängige Messverfahren oder Neukalibrierungen entfallen. Somit ist ein vollautomatischer Betrieb über lange Zeiträume durchführbar.

Wird dieser Batterietest in sinnvoll gewählten periodischen Zeitabständen durchgeführt, kann ermittelt werden, wie die Batterien Zeiträume mit Extrembedingungen für die Stromversorgungsanlage (tiefe oder hohe Temperaturen, Überladung, starke Zyklisierung) überstanden haben und ob sie noch für einen weiteren Einsatzzeitraum, beispielsweise Winterbetrieb, die notwendige Kapazität aufweisen.

Vorteile ergeben sich weiterhin aus der Bewertung von Schäden an Batterien. Sinkt bei einem Batteriezweig plötzlich die Spannung, schaltet die Steuerung zunächst auf einen anderen Batteriezweig zur Versorgung der Last um. Ein Vergleich mit den für den nicht als ordnungsgemäß arbeitend befundenen Batteriezweig hinterlegten Messdaten und einer evtl. durchzuführenden Nachladung gibt Aufschluss darüber, ob durch ein außerordentliches Ereignis an der Last eine sehr hohe Entladung, etwa durch einen zeitweiligen Kurzschluss, oder aber ein Zellenkurzschluss innerhalb der Batterie vorliegt. Sofern das System den Verlauf der letzten Entladekennlinie gespeichert hat, genügt eine Teilentladung zur Bewertung des Batteriezustandes. Liegt der Verlauf der Entladekennlinie der eingeleiteten Teilentladung im engen Toleranzfeld der letzten gemessenen, so hat ein zeitweiliger äußerer Kurzschluss vorgelegen. Weicht die Spannung beim Einschalten des Entladewiderstandes über die Toleranz der letzten Entladekennlinie hinaus (stark) ab, kann von einem Zellenkurzschluss ausgegangen werden.

Durch den Komplex der beschriebenen Maßnahmen wird eine hohe Verfügbarkeit der autonomen Stromversorgung erreicht. Bei der Erkennung eines Fehlerfalls in einem Teilspeicher oder an Schaltern bleibt die Anlage weiterhin betriebsfähig; in der Steuereinheit kann durch geeignete Fernwirksignalisierung die Instandhaltung veranlasst werden.

Die Erfindung soll nachstehend anhand von Ausführungsbeispielen näher erläutert werden In den zugehörigen Zeichnungen zeigen
- Fig. 1: die erfindungsgemäße Schaltungsanordnung mit n Batteriezweigen und
- Fig. 2: die Schaltungsanordnung mit zwei Batteriezweigen.

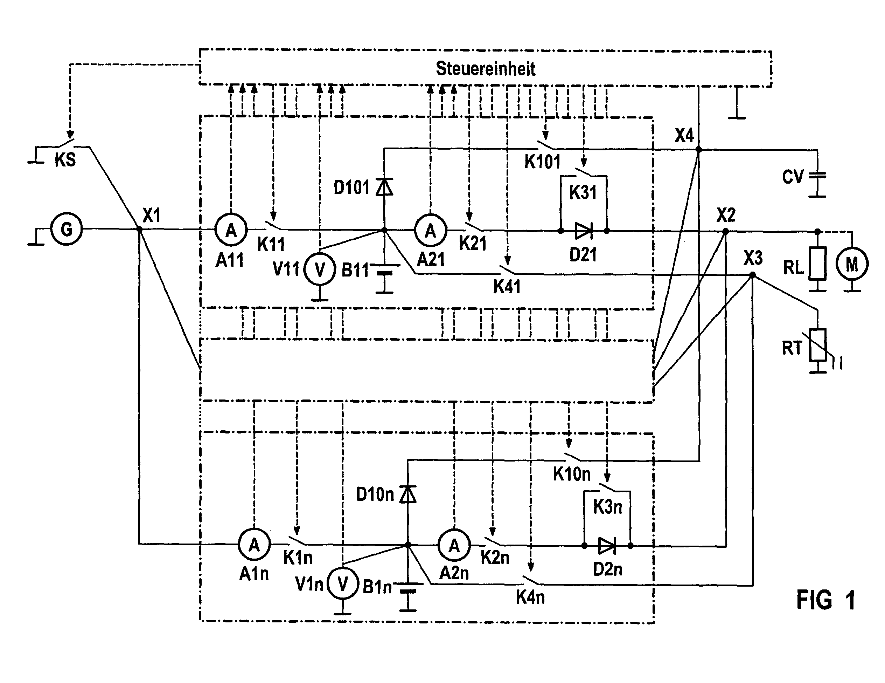

Gemäß Fig. 1 besteht die autonome Stromversorgungsanlage aus einem Generator G mit statistisch verteilter Energiegewinnung, wie Photovoltaik- oder Windkraftgeneratoren, oder aus einem einmalig mit Primärenergie versorgten Generator mit sehr hohem Wirkungsgrad, wie Brennstoffzellen oder aus einer Kombination von beiden Generatorarten, wobei die Nennleistung des Generators kleiner als die auftretende Spitzenleistung des Verbrauchers ist, und mehreren gleich großen parallelen Batteriezweigen B11, B12...B1n, die je nach Ladezustand abwechselnd die Last mit Energie versorgen oder vom Generator G nachgeladen werden.

Zwischen einer mit dem Generator G verbundenen Eingangsschiene X1 und einer mit einer Last RL verbundenen Ausgangsschiene X2 befinden sich n-parallele Zweige, bestehend aus einer in Reihe geschalteten eingangsseitigen Strommessstelle A1n, einem Ladeschalter K1n sowie der Batterie B1n, wobei der Pluspol der Batterie B1n seinerseits mit einer zweiten Strommessstelle A2n und in Reihe dazu mit einem Schalter K2n und der Diode D2n kathodenseitig zur Ausgangsschiene X2 geführt ist. Zusätzlich wird an den Pluspol der Batterie B1n ein weiterer Schalter K4n angeschlossen, dessen zweiter Anschluss zu einer Sammelschiene X3 führt. Weiterhin ist der Pluspol der Batterie B1n anodenseitig mit der Entkoppeldiode D1On verbunden, während deren Kathode über einen in Reihe liegenden Schalter K10n an eine weitere Sammelschiene X4n geführt ist. Parallel zu den Anschlüssen jeder Batterie B1n befindet sich eine Spannungsmessstelle V1n.

Die Sammelschiene X1 ist wiederum mit einem Schalter KS nach Masse verbunden, die Sammelschiene X3 wird über einen Testwiderstand RT nach Masse angeschlossen, während die Sammelschiene X4 an einen parallel nach Masse geschalteten Kondensator CV sowie an den positiven Anschlusspunkt einer Steuereinheit angeschlossen ist. Die Steuereinheit erfasst alle Messgrößen der Strommessstellen A1n, A2n sowie der Spannungsmessstellen V1n und steuert die Schalter KS, K1n, K2n, K4n und K10n.

Im normalen Betriebszustand wird der Generator G über den Schalter K1n an einen Ladezweig für eine Batterie B1n geschaltet. Die Strommessstelle A1n erfasst den Ladestrom, die Spannungsmessstelle V1n die Ladespannung und die Steuereinheit ermittelt die Parameter für den Ladezustand und schaltet den Generator G von der voll geladenen Batterie B1n ab. Danach kann ein weiterer Batteriezweig über den jeweiligen Schalter mit dem Generator G verbunden werden und es erfolgt die Ladeprozedur wie beschrieben. Sind alle Batterien B1n geladen und die Last RL ist nicht eingeschaltet (z.B. Standby-Betrieb), kann der Generator G in Abhängigkeit von der Kennlinie mit dem Schalter KS zum Abbau überschüssiger Energie kurzgeschlossen oder aber durch Öffnen aller Schalter K1 im Leerlauf betrieben werden.

Zum Betreiben der Last RL wird ein von der Steuereinheit ausgewählter Schalter K2n eingeschaltet und über die Diode D2n am Ausgang Energie bereitgestellt. Bei Erschöpfung einer Batterie B1n wird ein zweiter Schalter K2n eines zweiten Batteriezweiges hinzugeschaltet. Durch die positive Potentialdifferenz der neu zugeschalteten Batterie B1n erfolgt automatisch und unterbrechungsfrei die Kommutierung des Laststroms auf die neu hinzugeschaltete Batterie B1n. Danach erfolgt zeitunkritisch das Abschalten des entladenen Batteriezweiges. Durch die Dioden D2n wird das Fließen von Querströmen vermieden.

Das Betreiben der Last RL mit mehreren eingeschalteten Batteriezweigen ist möglich, wobei die Batterie B1n mit der höchsten Spannung zunächst den vollen Laststrom übernimmt, bis im Zuge der Entladung andere Batterien B1n an der Versorgung der Last RL beteiligt werden. Der Generator G kann aber auch in zulässiger Weise an eine Batterie B1n angeschlossen sein, die gleichzeitig die Last RL versorgt.

Die Strommessstellen A2n dienen der Erfassung der Entladeströme, die Spannungsmessstelle V1n dient der Überwachung der Entladespannung. In der Steuereinheit erfolgt die Bewertung der Entladung, aber auch die Steuerung der Schalter K2n für den Fall der Überlast oder der zwangsweisen Abschaltung bei Kurzschluss. Für die Bewertung des Alterungszustandes und die Ermittlung der Restlebensdauer der Batterien B1n in der autonomen Stromversorgung wird eine periodische Kapazitätsermittlung durchgeführt. Zu diesem Zweck wird die ausgewählte Batterie B1n von der Last RL mittels Schalter K2n und mittels Schalter K10n von der Sammelschiene X4 für die Eigenversorgung getrennt, durch den Generator G über den Schalter K1n bis zur Ladeschlussspannung aufgeladen; danach wird der Generator G abgeschaltet und die Batterie B1n durch Schließen des Schalters K4n am Testwiderstand RT bis zur durch das Spannungsmessglied V1n ermittelten Entladeschlussspannung entladen. Im einfachsten Fall besteht der Testwiderstand RT aus einem linearen Widerstand; wesentlich genauere Ergebnisse lassen sich bei einer Konstantstromentladung mit einem stromgeregelten Widerstand erreichen. Nach Entladung der Batterie B1n wird der Schalter K4n geöffnet und die Batterie B1n über den Schalter K1n wieder an den Generator G zur Aufladung geschaltet, sobald letzterer von der Steuereinheit von der Ladung einer anderen Batterie B1n freigegeben wird. Zudem wird die Batterie B1n durch den Schalter K10n wieder an die Sammelschiene X4 gekoppelt.

Die grundsätzliche Auslegung des verteilten Energiespeichers erfolgt derart, dass die Kapazität von n-1 Batterien zur Versorgung der Last RL ausreicht, um die Zeit der Ladung, Entladung und Wiederaufladung der zu prüfenden Batterie B1n bei einem definierten mittleren Energieeintrag sicher zu überbrücken. Im übrigen erfolgt die Auslegung der Gesamtspeicherkapazität entsprechend der Lastspiele, des Lastverhaltens und der möglichen Energiegewinne.

Der Stützkondensator CV überbrückt Spannungseinbrüche an der Stromversorgung der Steuereinheit durch evtl. an der Last RL auftretende Kurzschlüsse innerhalb der Reaktionszeit der Steuereinheit zum Abschalten der Schalter K2n.

Eine Besonderheit besteht in Anlagen mit kleiner Ausgangsspannung, aber auch in Anlagen mit motorischen Lasten, die zudem Bremsenergie rekuperieren können. Durch Einfügen eines zusätzlichen Schalters K3n parallel zur Diode D2n entsteht ein bidirektionaler Schalter, der es ermöglicht, frei werdende Energie einer aktiven Last M in die Batterien B1n zurückzuspeisen. Außerdem wird die durch die Flussspannung der Diode D2n oftmals nicht zu vernachlässigende Verlustleistung vermieden. Die Umschaltung von einem Zweig auf den anderen erfordert in diesem Fall zunächst eine Abschaltung des Schalters K3n, danach kann der Schalter K2n des einzuschaltenden Batteriezweiges betätigt werden; der bisherige Batteriezweig wird abgeschaltet und nachfolgend wird der Schalter K3n des neu zugeschalteten Batteriezweiges eingeschaltet.

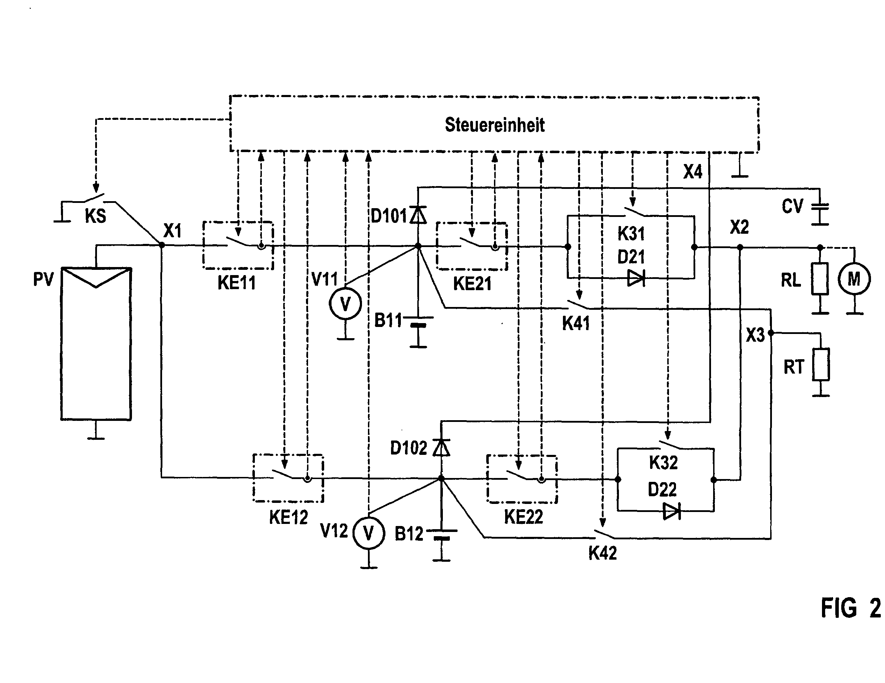

Das Ausführungsbeispiel gemäß Fig. 2 bezieht sich auf eine autonome Stromversorgung, bestehend aus einem Solargenerator PV und zwei parallelen Batteriezweigen B11, B12 als Energiespeicher. Die Schalter KE11...KE22 sind als leistungselektronische Schalteinheiten mit integrierter Strommessung ausgeführt, die Steuereinheit besteht aus einem Mikrocontroller mit einem nichtflüchtigen Speicher zur Steuerung der Leistungshalbleiter sowie zur Verwaltung, Archivierung und zum Vergleich von Messdaten.

Die Eigenversorgung der Steuereinheit erfolgt mit minimalem, wesentlich unterhalb der Selbstentladung einer Batterie B11, B12 liegendem Energiebedarf. Daher ergibt sich eine Ausführungsvariante in der Form, dass auf die Schalter K10n verzichtet werden konnte. Diese Lösung ist insbesondere dann praktikabel, wenn der Fehler während der Testentladung der Batterien B11, B12 innerhalb der zulässigen Grenzen bleibt.

Ein Vorteil dieses Beispiels besteht auch darin, dass durch die gewählte Anordnung der Schaltelemente das Massepotential durchgängig erhalten bleibt und somit die sichere Erdung aller Anlagenteile gewährleistet ist.

## Patentansprüche

1. Verfahren zur autonomen Stromversorgung einer Last (RL) mittels Batterien (B1n), die über mindestens einen Stromerzeuger (G, PV) geladen werden können, wobei mindestens zwei funktional gleichberechtigte parallele Batteriezweige vorhanden sind, deren Kapazität jeweils ausreicht, die Last allein über einen bestimmten Zeitraum zu versorgen, und wobei jeder Batteriezweig zu festgelegten Zeitpunkten zum Zweck von Untersuchungen an einer Batterie von einer Steuereinheit mittels Schaltern jeweils auf der Seite des Stromerzeugers sowie jeweils auf der Seite der Last aus der Stromversorgungsanlage freigeschaltet wird, während die anderen Batteriezweige die Last weiterversorgen,
**dadurch gekennzeichnet,**
**dass** eine aus der Stromversorgungsanlage freigeschaltete Batterie durch Ruhezustandserfassung, Teil- oder Vollentladung hinsichtlich ihres Zustandes messtechnisch erfasst und analysiert wird, indem mittels folgender Lade-/Entladeverfahren im Inselbetrieb
- entweder die Batterien in einem gewählten Zeitraster an die Last geschaltet werden und die jeweils zuletzt mit der Last verschaltete Batterie nachgeladen wird oder
- die an der Last befindliche Batterie jeweils bis zu einer definierten Entladespannung entladen und jeweils die am stärksten entladene Batterie nachgeladen wird, oder
- die Batterien durch den Stromerzeuger zyklisch im Standby-Betrieb geladen werden,
wobei zyklisch zwischen den Lade-/Entladeverfahren umgeschaltet wird.

## Claims

1. Method for autonomously supplying electrical power to a load (RL) by means of batteries (B1n) which can be charged via at least one electricity generator (G, PV), with a least two parallel battery branches with equal authority being provided, whose capacity is in each case sufficient to supply the load on its own over a specific time period, and with each battery branch being disconnected at fixed times for the purpose of investigations on a battery by a control unit by means of switches in each case on the electricity generator side and in each on the load side, from the electrical power supply system, while the other battery branches continue to supply the load,
**characterized**
**in that** the state of a battery which has been disconnected from the electrical power supply system is recorded by measurement and is analysed by rest-state recording, partial discharge or full discharge, in that, by means of the following charging/discharge methods in island operation
- either the batteries are connected to the load in a selected time pattern and that battery which was in each case connected most recently to the load is recharged, or
- the battery which is connected to the load is in each case discharged down to a defined discharge voltage, and the battery which has been discharged to the greatest extent is in each case recharged, or
- the batteries are charged by the electricity generator cyclically in the standby mode,
with switching taking place cyclically between the charging/discharge methods.

## Revendications

1. Procédé d'alimentation autonome en courant d'une charge (RL) au moyen d'accumulateurs électrochimiques (B1n) qui peuvent être chargés par au moins une source (G, PV) de courant, au moins deux branches d'accumulateurs électrochimiques en parallèle égales du point de vue fonctionnel étant présentes, la capacité de chacune d'entre elles suffisant à soi-seul à alimenter la charge pendant un laps de temps déterminé, et dans lequel chaque branche de l'accumulateur électrochimique est, à des instants fixés, en vue d'effectuer des recherches sur un accumulateur électrochimique, déconnectée par une unité de commande, au moyen d'interrupteurs respectivement du côté de la source de courant ainsi que respectivement du côté de la charge, du système d'alimentation en courant, tandis que les autres branches d'accumulateurs électrochimiques continuent à alimenter la charge,
**caractérisé**
**en ce que** l'on relève du point de vue de la technique de mesure et on analyse l'état de charge d'un accumulateur électrochimique déconnecté du système d'alimentation en courant par détection de l'état de repos, de la décharge partielle ou de la décharge complète, par le fait qu'au moyen d'un procédé suivant de charge/décharge en fonctionnement en régime isolé,
- on connecte les accumulateurs électrochimiques sur la charge dans une trame de temps sélectionnée et on recharge l'accumulateur électrochimique connecté en dernier avec la charge ou
- on décharge l'accumulateur électrochimique se trouvant sur la charge respectivement jusqu'à une tension de décharge définie et on recharge l'accumulateur électrochimique le plus déchargé ou
- on charge cycliquement en fonctionnement en secours les accumulateurs électrochimiques par la source de courant,
dans lequel on commute cycliquement entre les procédés de charge/décharge.
